# FASCICULE DE BREVET EUROPEEN

(11) **EP 0 667 461 B1**
(45) Date de publication et mention de la délivrance du brevet: **28.05.1997**
(21) Numéro de dépôt: 94810072.2
(22) Date de dépôt: 09.02.1994
(51) Int. Cl.: F16B 2/18, F16B 7/04, F16D 1/10

(54) **Assemblage de précision entre deux pièces**
Präzisionsbefestigung zwischen zwei Teilen
Precision connection between two parts

(43) Date de publication de la demande: 16.08.1995
(73) Titulaire: PCM WILLEN S.A., CH-1844 Villeneuve (CH)
(72) Inventeur: Willen, Charles, CH-1844 Villeneuve (CH)
(74) Mandataire: Kiliaridis, Constantin

(56) Documents cités:
- WO-A-82/00863
- DE-A- 2 358 633
- GB-A- 2 187 820

## Description

La présente invention concerne un assemblage de précision comportant deux pièces dont la première présente une partie femelle et la seconde une partie mâle et des moyens de serrage à force de serrage élevée et à changement rapide.

L'invention concerne de manière courante la mécanique de précision, néanmoins de nombreuses autres applications sont possibles lorsqu'on désire fixer de manière rigide et temporaire un élément sur un support avec facilité et rapidité lors du serrage et du desserrage. On souhaite aussi obtenir une grande précision de fixation (centrage des pièces), une force de serrage élevée avec résistance aux efforts dans toutes les directions, une rapidité de changement et également une construction réalisable à un coût aussi bas que possible.

Il existe des dispositifs de fixation permettant de satisfaire aux exigences précitées avec plus ou moins de succès. Très souvent ces dispositifs présentent des faiblesses concernant l'une ou l'autre des conditions requises et sont d'un coût relativement élevé, dû principalement à la complexité de la structure. Souvent d'ailleurs, ces constructions ne peuvent pas s'appliquer à des pièces de faibles dimensions, par exemple si on se réfère à des pièces de forme générale cylindrique, il serait souhaitable que l'on puisse assembler des pièces d'un diamètre de l'ordre de 15 mm.

Pour obtenir un assemblage par serrage de deux pièces, il est connu d'utiliser un excentrique ou une came. Néanmoins, il se pose deux problèmes contradictoires dans de tels cas à savoir, si l'excentricité est grande afin de permettre un mouvement axial relativement grand entre les pièces à assembler, la force de serrage n'est pas très élevée et peut nuire à la qualité de l'assemblage dans la mécanique de précision, ou inversément, si l'excentricité est faible on obtient des forces de serrage élevées, mais dans ce cas, le mouvement possible entre les pièces à assembler est très court et la mise en place des deux pièces, notamment la pièce mâle dans la pièce femelle ne peut se faire en satisfaisant tous les critères indispensables pour assurer une grande rigidité à tous les types d'effort.

Accessoirement, lorsqu'on désire obtenir un assemblage permettant également la transmission de violents efforts de torsion entre les deux pièces, il faut prévoir des éléments permettant de transmettre ces efforts. Le seul moyen est d'utiliser des éléments mâles disposés autour de l'axe de rotation collaborant avec des éléments femelles. Dans ce cas, pour assurer un assemblage qui, d'une part, retient axialement les deux pièces et, d'autre part, permet la transmission des efforts de torsion, il faut disposer d'un mouvement axial relativement important entre les deux pièces à assembler. Il est également très utile de pouvoir effectuer cet assemblage et désassemblage avec rapidité et précision, et surtout que toutes ces fonctions soient parfaitement assurées même avec des pièces d'un volume relativement faible.

Le document GB-A-2 187 820 décrit un dispositif de couplage des extrémités de deux arbres pour la transmission d'un couple. L'assemblage est réalisé par pénétration d'une partie mâle dans une partie femelle.

La partie mâle comprend d'une douille munie de dents destinées à assurer le serrage de deux pièces en venant s'appuyer par une face en pente contre des dents complémentaires de la partie femelle. L'engagement entre les dents s'obtient en faisant tourner la douille autour de l'axe de l'arbre d'environ 60°.

La présente invention a pour but de proposer un tel assemblage palliant les inconvénients de l'art antérieur.

L'assemblage selon l'invention est caractérisé par le fait que la partie femelle comprend un alésage axial contenant un tirant dont une des extrémités est munie d'une ouverture agencée pour constituer l'élément femelle d'une fixation à baïonnette, que la partie mâle de la seconde pièce comprend une extrémité agencée pour constituer l'élément mâle de la fixation à baïonnette assurant en collaboration avec l'élément femelle du tirant la fixation axiale des deux pièces, et un tourillon de diamètre conjugué au diamètre de l'alésage, que lesdits moyens de serrage sont constitués par un passage transversal du tirant traversé par un axe muni de deux tourillons logés dans deux trous transversaux de la première pièce et comprenant entre les deux tourillons et dans la portion se trouvant dans le passage du tirant une came dont la section transversale présente au moins deux parties de paroi opposées (P, X) dont la distance est inférieure à la distance entre deux parois opposées dans la direction axiale du logement transversal du tirant, ledit axe étant muni de moyens pour être tourné afin d'obtenir le serrage et le desserrage des deux pièces par l'action de la came sur les parois du passage transversal du tirant.

Les avantages de l'invention sont les suivants :

En utilisant une fixation à baïonnette on obtient premièrement et facilement une fixation axiale des deux pièces. L'utilisation d'un tirant déplaçable dans l'alésage de la pièce femelle et d'une came agissant sur les parois d'un passage transversal dont les formes et dimensions permettant un jeu axial entre les deux pièces à assembler contribuent à la rapidité d'assemblage et de désassemblage. En effet, lorsque la came et le tirant se trouvent au repos, il suffit d'engager la partie mâle de la fixation à baïonnette dans la partie femelle, effectuer une rotation pour assurer la tenue axiale, cette rotation étant de préférence de 90°, et ensuite agit sur l'axe transversal pour déplacer le tirant dans le sens de serrage, c'est-à-dire amener la pièce femelle et mâle en un contact étroit.

Selon une exécution préférée, un moyen de rappel, notamment un ressort agit sur le tirant pour le pousser vers la position de repos permettant ainsi lors du desserrage des deux pièces d'obtenir le déplacement maximum du tirant vers l'extérieur de l'alésage et permettre de désassembler les deux pièces.

Le déplacement axial entre les deux pièces est très important lorsque l'assemblage doit assurer également la transmission des efforts de torsion et que des éléments mâles de la partie mâle située autour de l'axe de rotation doivent s'accoupler avec des éléments femelles de la partie femelle. En effet, pour qu'un tel assemblage puisse s'opérer, il faut que la distance entre les surfaces d'appui des deux pièces à assembler soit suffisante pour que les pièces mâles, permettant la transmission des efforts de torsion, ne soient pas en contact avec la surface de la partie femelle lors de la rotation des deux pièces assurant la fixation à baïonnette. Ceci est donc obtenu grâce au déplacement axial du tirant poussé en avant par un ressort selon une variante d'exécution préférée. Ainsi, lorsqu'on tourne les pièces pour assurer la fixation à baïonnette, on met en face en même temps les éléments mâles et les éléments femelles assurant la transmission des efforts de torsion et on agit sur le tirant à l'encontre du ressort pour obtenir le rapprochement des deux parties et leur serrage, en actionnant l'axe transversal avec la came.

Selon une autre variante d'exécution, afin d'obtenir lors de l'assemblage un centrage rapide et aisé malgré le jeu infime de l'emboîtement, un pré-guidage des parties mâle et femelle est réalisé lors de la fixation à baïonnette au moyen d'un téton situé sur la partie mâle de la fixation à baïonnette et d'un trou situé sur la partie femelle de la fixation à baïonnette dans l'axe du tirant. Le trou en question permet également d'effectuer un graissage du logement transversal de l'axecame.

Dans le but d'obtenir un serrage et désserrage de l'assemblage en agissant uniquement dans une direction, le profil de la came présente une structure asymétrique le long de sa surface latérale. Ainsi, en position de repos, une surface plane dont la distance à l'axe de pivotement et à l'axe transversal est la plus petite par rapport au reste de la surface d'appui de la came, est en contact avec la paroi du logement transversal situé du côté opposé au côté de l'assemblage, et elle est suivie d'une première section présentant une pente progressive rapide permettant, après l'engagement de la partie mâle de la fixation à baïonnette dans la partie femelle et éventuellement la mise en registre des éléments mâles et femelles permettant la transmission des efforts de torsion, une approche rapide entre les deux pièces, suivie d'une section en pente à variation constante lente pour assurer une force de serrage élevée entre les pièces, suivi d'un court arc de cercle concentrique avec l'axe de pivotement et une section à pente dégressive à variation rapide aboutissant au plat permettant de maintenir l'assemblage ouvert au repos. La dernière section à variation rapide et la section en arc de cercle permettent d'éviter un serrage de l'assemblage dans le mauvais sens. Il est en effet souhaitable que le serrage s'effectue toujours en tournant l'axe transversal dans un sens déterminé. Dans ce but d'ailleurs, une flèche est dessinée sur la seconde pièce pour indiquer ce sens. Si malgré tout une personne essaye de serrer en tournant dans le mauvais sens, une rampe assez forte empêche un blocage du système.

Ainsi, le dispositif selon l'invention permet dans sa version la plus complète, d'assembler rapidement avec précision et avec une grande force de serrage deux pièces grâce à l'utilisation d'une came présentant un profil asymétrique et au moins deux parties opposées dont la distance est inférieure à la distance dans la direction axiale de deux parois du logement transversal du tirant, permettant ainsi un déplacement axial lorsque lesdites parties de la came se trouvent orientées convenablement, ainsi que d'un ressort poussant en permanence le tirant vers l'extérieur, donc être en contact avec la came.

L'invention sera décrite plus en détail à l'aide du dessin annexé.

La figure 1 représente une vue en coupe axiale de la pièce munie de la partie femelle.

La figure 2 est une vue de côté de la pièce précédente.

La figure 3 est une vue de côté de la pièce munie de la partie mâle.

La figure 4 est une vue de côté de la pièce de la figure 3.

La figure 5 est une vue de côté et partiellement en coupe des deux pièces partiellement engagées.

La figure 6 est une vue avec une coupe axiale de la pièce munie de la partie femelle, les deux pièces étant en position d'assemblage.

La figure 7 est une vue de côté de l'axe transversal commandant le serrage et le desserrage.

La figure 8 est une vue schématique et agrandie du profil de la came à l'intérieur du logement transversal du tirant.

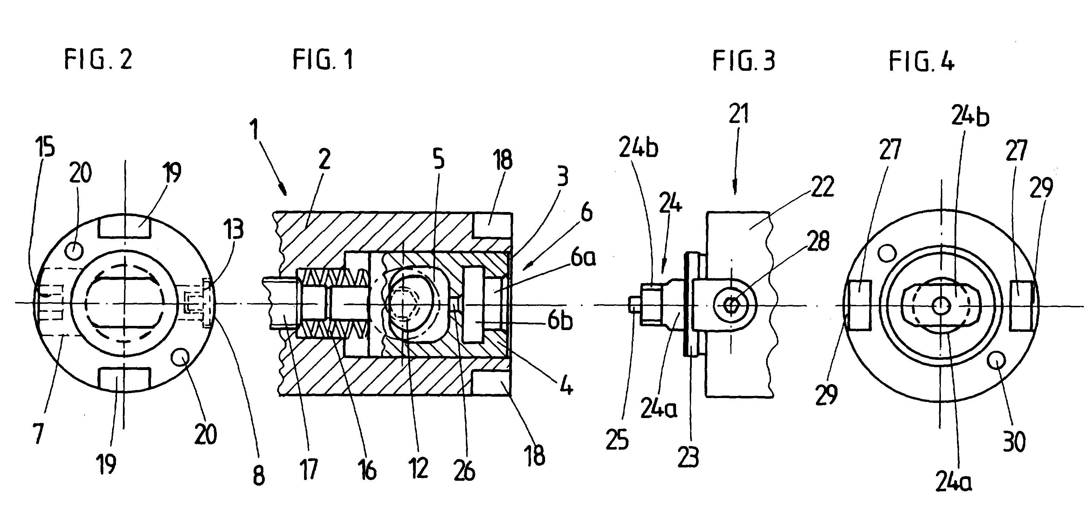

En se référant maintenant aux figures 1 à 3, nous allons décrire les deux pièces à assembler.

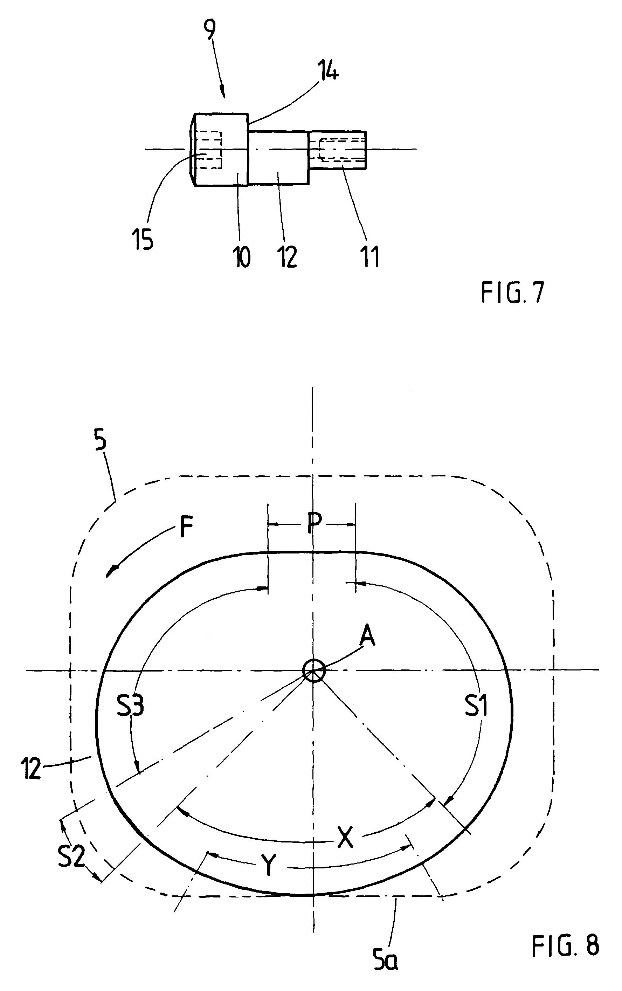

La pièce 1 munie d'une partie femelle est constituée d'un corps 2 qui peut avoir toute forme voulue mais par simplification et sans que ceci constitue une restriction, nous avons choisi un corps cylindrique 2 présentant un diamètre extérieur D. Le corps 2 est muni d'un alésage 3 de grande précision à l'intérieur duquel se trouve un tirant 4 présentant un passage transversal 5 ayant une section de forme rectangulaire arrondie et à son extrémité par laquelle l'accouplement à la pièce mâle devra avoir lieu, il est muni d'une fixation 6 à baïonnette femelle constituée d'une ouverture oblongue 6a suivie d'un trou cylindrique 6b dont le diamètre est au moins égal à la longueur du trou oblong 6a. Le corps 2 est muni de deux passages transversaux 7 et 8 de diamètre différent dans lesquels prend place un axe 9 (figure 7) présentant deux tourillons 10 et 11 dont les dimensions correspondent aux dimensions des deux passages 7 et 8 du corps 2. Une partie excentrée en forme de came 12 est située à l'intérieur du passage 5 du tirant 4. L'axe 9 est tenu axialement dans le corps 2, d'une part, par une vis de retenue 13 et, d'autre part, par un épaulement 14. La partie de l'axe présentant le tourillon de plus grand diamètre est munie également d'une ouverture 15 de préférence de forme hexagonale destinée à entraîner l'axe au moyen d'un outil mâle de forme et dimensions conjuguées. Enfin, un ressort 16 est logé dans un prolongement d'un diamètre inférieur de l'alésage 3 et agit sur la face du tirant 4 se trouvant à l'intérieur de l'alésage pour le pousser en permanence vers l'extérieur de l'alésage, autrement dit pour pousser la face correspondante du passage transversal 5 contre la came 12 de l'axe 9. Une vis 17 permet de régler la force de poussée du ressort. Le corps 2 est également muni d'au moins deux encoches 18 dans lesquelles vont se loger deux pièces mâles correspondantes de la partie mâle pour permettre la transmission des efforts de torsion. Le corps 2 est également traversé par deux passages 20 qui vont correspondre lors de l'assemblage à deux passages de l'autre pièce permettant le passage d'un fluide.

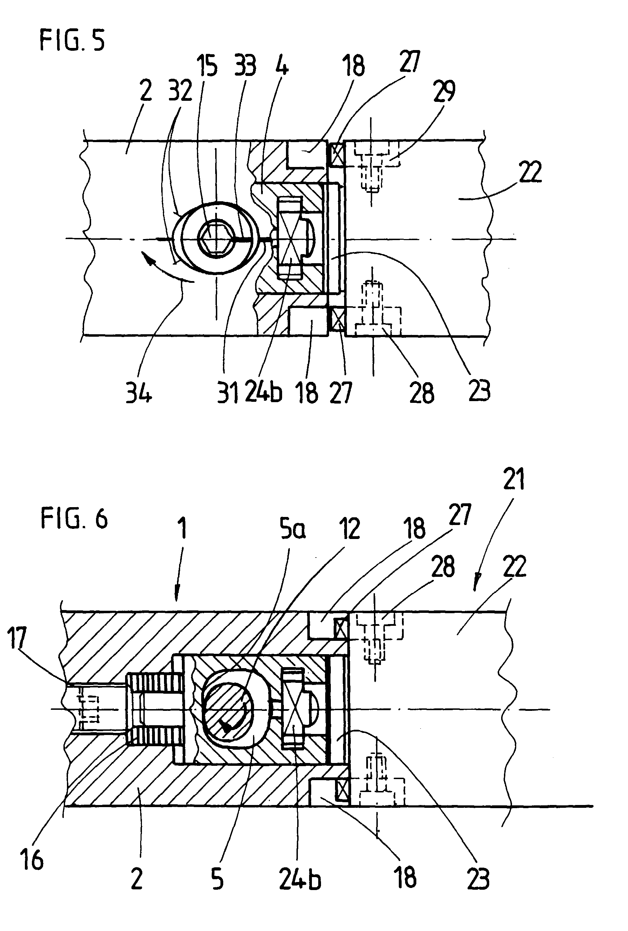

L'autre pièce 21 présente un corps 22 qui également pour des raisons de simplicité est ici cylindrique, mais sans que ceci constitue une restriction présentant également un diamètre extérieur D. Le corps 22 est muni d'un tourillon 23 présentant un diamètre légèrement inférieur au diamètre de l'alésage 3 et légèrement chanfreiné pour aider au centrage lors de l'assemblage. Le tourillon 23 est muni sur sa partie intérieure d'une fixation à baïonnette mâle 24 composée d'une projection cylindrique 24a suivie d'une pièce rectangulaire arrondie 24b de dimensions correspondantes au trou oblong 6a du tirant 4. Dans le but de permettre un précentrage lors de la mise en place de l'élément mâle 24 dans l'élément femelle 6 de la fixation à baïonnette, la partie mâle est munie sur sa partie antérieure d'un téton de centrage 25 destiné à collaborer avec un trou 26 se trouvant au-delà de l'alésage 6b permettant également de lubrifier l'intérieur du logement transversal 5 du tirant 4. La pièce mâle est également munie de deux tenons sous la forme de deux clavettes 27 fixées par des vis 28 dans des logements 29, dont une partie s'étend au-delà du logement 29 pour collaborer avec les encoches 18 de la partie femelle lorsque les deux pièces 1 et 21 sont assemblées. Le corps 22 est également muni de trous 30 qui viennent collaborer avec les trous 20 du corps 2 pour le passage d'un fluide. La disposi-tion des clavettes 27 par rapport à la pièce mâle 4, 24b et telle que lors de l'engagement des pièces mâle et femelle et la fixation à baïonnette après une rotation de préférence de 90°, lesdites clavettes 29 se trouvent face aux encoches 18 de la pièce 1 (figure 5).

En tournant ensuite l'axe 9 au moyen d'un outil approprié dans le sens de la flèche 34 en faisant passer un repère 33 situé sur la tête de l'axe 9 entre le repère 31 et le repère 32 on obtient le serrage des deux pièces 1 et 21 aussi bien axialement et en rotation comme représenté à la figure 6. Le serrage axial est obtenu au moyen de la came 12 qui agit sur la paroi 5a du logement transversal du tirant pour le pousser à l'encontre du ressort 16 tirant en même temps au moyen de la fixation à baïonnette la pièce 21 contre la pièce 1. Ainsi, la tenue axiale des deux pièces est obtenue au moyen de la fixation à baïonnette et la transmission des efforts de torsion au moyen de clavettes 29.

Une partie importante de cet assemblage est la came 12 que nous avons représentée à la figure 8 vue par le dessous de l'axe 9. Cette came représentée ici à l'intérieur du logement 5 présente un plat P lequel, lorsqu'il est en contact avec la paroi 5a du logement 5, correspond à la position de desserrage des deux pièces. La flèche F représentée sur cette figure montre le sens dans lequel l'axe a été tourné pour obtenir le serrage.

La came telle que représentée à la figure 8 présente dans le sens contraire de serrage, après le plat P un premier segment S1 présentant une pente à variation croissante rapide permettant d'obtenir un rapprochement rapide des deux pièces 1, 21 et notamment correspondant dans le cas des deux pièces représentées aux figures précédentes à l'engagement des clavettes 27 dans les encoches 18 suivi d'un segment X présentant une variation de pente lente en progression constante permettant d'obtenir un serrage fort et efficace. En réalité le serrage doit être obtenu dans le segment Y contenu dans le segment X. Néanmoins, pour tenir compte des tolérances de fabrication ainsi que de l'élasticité des différents matériaux, on considère que le serrage doit être obtenu à l'intérieur du segment X. Il est suivi d'un segment court S2 qui correspond à un arc de cercle centré en l'axe de pivotement A et qui agit comme partie de référence et de contrôle du profil complet de la came et il est suivi d'un segment S3 présentant une rampe assez forte pour empêcher un blocage du système de serrage par une rotation dans le mauvais sens de l'axe came.

Il est également important de souligner que mis à part la forme de cette came, les dimensions du logement 5 jouent un rôle important pour le bon fonctionnement de l'assemblage. Ainsi, il faut que les dimensions du logement 5 permettent le bon fonctionnement de la came notamment par rapport aux parois latérales ainsi le logement présente des dimensions supérieures à la dimension supérieure de la came. La came présente également une dimension entre le plat P et le segment X bien inférieure à la distance dans la direction axiale des parois du logement pour donner, en position de désassemblage, lorsque le plat est en contact avec la paroi 5a, un jeu axial suffisant au tirant 4. Il est à noter que, lors du desserrage, la came 12 permet aussi de pousser le tirant 4 dans le sens du désassemblage lorsque la force du ressort n'est pas suffissante pour débloquer l'assemblage, un "collage" pouvant intervenir suite à une très longue période d'assemblage dans un milieu défavorable.

## Revendications

1. Assemblage de précision comportant deux pièces (1, 21) dont la première (1) présente une partie femelle et la seconde (21) une partie mâle et des moyens de serrage à force de serrage élevée et à changement rapide, caractérisé par le fait que la partie femelle comprend un alésage axial (3) contenant un tirant (4) dont une des extrémités est munie d'une ouverture (6) agencée pour constituer l'élément femelle d'une fixation à baïonnette, que la partie mâle de la seconde pièce (21) comprend une extrémité (24) agencée pour constituer l'élément mâle de la fixation à baïonnette assurant en collaboration avec l'élément femelle (6) du tirant (4) la fixation axiale des deux pièces (1, 21), et un tourillon (23) de diamètre conjugué au diamètre de l'alésage (3), que lesdits moyens de serrage sont constitués par un passage transversal (5) du tirant (4) traversé par un axe (9) muni de deux tourillons (10, 11) logés dans deux trous transversaux (7, 8) de la première pièce (1) et comprenant entre les deux tourillons (10, 11) et dans la portion se trouvant dans le passage (5) du tirant (4) une came (12) dont la section transversale présente au moins deux parties de paroi opposées (P, X) dont la distance est inférieure à la distance entre deux parois opposées dans la direction axiale du logement transversal (5) du tirant (4), ledit axe (9) étant muni de moyens (15) pour être tourné afin d'obtenir le serrage et le desserrage des deux pièces (1, 21) par l'action de la came (12) sur les parois du passage transversal (5) du tirant (4).

2. Assemblage selon la revendication 1, caractérisé par le fait que la partie mâle comprend près de sa surface latérale des tenons (27) destinés à collaborer avec des encoches (18) conjugées situées sur la surface latérale de la partie femelle pour assurer la transmission des efforts de torsion entre les deux pièces (1, 21) assemblées.

3. Assemblage selon l'une des revendications 1 ou 2, caractérisé par le fait que la partie mâle est munie d'un élément mâle (25) de pré-guidage collaborant avec un trou (26) du tirant (4) pour assurer le centrage des deux pièces (1, 21) avant l'engagement du tourillon (23) de la seconde pièce (21) dans l'alésage (3) de la première.

4. Assemblage selon l'une des revendications 1 à 3, caractérisé par le fait que la came (12) dudit axe (9) présente un profil asymétrique par rapport à un plan axial pour permettre le serrage seulement dans un sens de rotation dudit axe (9), que ledit profil de la came (12) présente une surface d'appui sur la paroi du passage (5) du tirant (4) présentant une section (S1) à pente progressive rapide permettant après l'engagement de la partie mâle (24) de la fixation à baïonnette dans la partie femelle (6) correspondante d'obtenir une approche rapide entre les deux pièces (1, 21), suivie d'une section (X) à pente à variation constante lente pour assurer une force de serrage élevée entre les pièces, (1, 21) suivie d'un court arc de cercle (S2) concentrique avec l'axe de pivotement (A) et une section (S3) à pente dégressive à variation rapide aboutissant à un plat (P) permettant de maintenir l'assemblage ouvert au repos.

5. Assemblage selon l'une des revendications 1 à 4, caractérisé par le fait que le tirant (4) est soumis à une force de rappel axial le poussant contre la came (12) vers la seconde pièce (21).

6. Assemblage selon la revendication 5, caractérisé par le fait que la force de rappel est générée par un ressort (16) disposé dans un logement au fond de l'alésage (3) de la première pièce (1).

## Patentansprüche

1. Präzisionsverbindung mit zwei Teilen (1, 21), von denen das erste Teil (1) ein Aufnahmeteil und das zweite Teil (21) ein Steckerteil aufweist, und mit rasch betätigbaren Festspannmitteln mit grosser Spannkraft, dadurch gekennzeichnet, dass das Aufnahmeteil eine axiale Bohrung (3) aufweist, welche ein Zugorgan (4) enthält, dessen eines Ende mit einer Oeffnung (6) versehen ist, die dazu bestimmt ist, das Aufnahmeelement eines Bajonettverschlusses zu bilden, dass das Steckerteil des zweiten Teils (21) ein das Steckerteil des Bajonettverschlusses bildendes Ende (24), das im Zusammenwirken mit dem Aufnahmeelement (6) des Zugorgans (4) die axiale Befestigung der beiden Teile (1, 21) sichert, und einen Lagerzapfen (23) mit einem dem Durchmesser der Bohrung (3) angepassten Durchmesser aufweist, dass die erwähnten Festspannmittel aus einem transversalen Durchgang (5) des Zugorgans (4) bestehen, welcher von einer Achse (9) durchquert wird, die mit zwei, in zwei Querlöcher (7, 8) des ersten Teils (1) eingesetzten Lagerzapfen (10, 11) versehen ist und zwischen den beiden Lagerzapfen (10, 11) und in dem im Durchgang (5) des Zugorgans (4) befindlichen Bereich einen Nocken (12) aufweist, dessen Querschnitt wenigstens zwei gegenüberliegende Wandteile (P, X) hat, deren Abstand kleiner als der Abstand zwischen zwei axial gegenüberliegenden Wänden des transversalen Durchlasses (5) des Zugorgans (4) ist, und dass die erwähnte Achse (9) mit Mitteln (15) zum Drehen versehen ist, um die beiden Teile (1, 21) durch Wirkung des Nockens (12) auf die Wände des transversalen Durchlasses (5) des Zugorgans (4) festzuspannen und zu lösen.

2. Verbindung nach Anspruch 1, dadurch gekennzeichnet, dass das Steckerteil nahe seiner seitlichen Oberfläche Zapfen (27) aufweist, die dazu bestimmt sind, mit angepassten Kerben (18) zusammenzuarbeiten, welche auf der seitlichen Fläche des Aufnahmeteils angeordnet sind, um die Uebertragung von Torsionskräften zwischen den beiden zusammengefügten Teilen (1, 21) zu gewährleisten.

3. Verbindung nach einem der Ansprüche 1 oder 2, dadurch gekennzeichnet, dass das Aufnahmeteil mit einem Steckerteil (25) zum Führen versehen ist, welches mit einem Loch (26) des Zugorgans (4) zusammenwirkt, um das Zentrieren der beiden Teile (1, 21) vor dem Eingriff des Lagerzapfens (23) des zweiten Teils (21) in die Bohrung (3) des ersten Teils zu gewährleisten.

4. Verbindung nach einem der Ansprüche 1 bis 3, dadurch gekennzeichnet, dass der Nocken (12) der erwähnten Achse (9) ein Profil aufweist, das asymmetrisch in Bezug auf eine axiale Ebene ist, um das Festspannen nur in einer Drehrichtung der erwähnten Achse (9) zu erlauben, dass das erwähnte Profil des Nockens (12) eine Auflagefläche zur Anlage an der Wand des Durchlasses (5) des Zugorgans (4) aufweist, welche einen Abschnitt (S1) mit rascher progressiver Neigung hat, was es nach dem Eingriff des Steckerteils (24) des Bajonettverschlusses in das entsprechende Aufnahmeteil (6) erlaubt, eine rasche Annäherung zwischen den beiden Teilen (1, 21) zu erhalten, dass dem erwähnten Abschnitt (S1) ein Abschnitt (X) mit langsamer konstant variierender Neigung folgt, um eine erhöhte Spannkraft zwischen den Teilen (1, 21) zu gewährleisten, gefolgt von einem kurzen Kreisbogen (S2), der zur Drehachse (A) konzentrisch ist, und von einem Abschnitt (S3) mit rascher degressiv variierender Neigung, der in einem Flachprofil (P) endet, welches es erlaubt, die Verbindung im Ruhezustand offen zu halten.

5. Verbindung nach einem der Ansprüche 1 bis 4, dadurch gekennzeichnet, dass das Zugorgan (4) einer axialen Rückstellkraft unterworfen ist, welche es gegen den Nocken (12) zum zweiten Teil (21) hin stösst.

6. Verbindung nach Anspruch 5, dadurch gekennzeichnet, dass die Rückstellkraft durch eine Feder (16) erzeugt wird, welche in einer Aufnahmeöffnung im Boden der Bohrung (3) des ersten Teils (1) angeordnet ist.

## Claims

1. Precision assembly comprising two components (1, 21), the first (1) of which has a female part and the second (21) of which has a male part, and clamping means with a high clamping force and speedy changeover, characterised in that the female part comprises an axial bore (3) containing a tie (4), one of the ends of which is equipped with an opening (6) designed to constitute the female element of a bayonet-type fitting, in that the male part of the second component (21) comprises an end (24) designed to constitute the male element of the bayonet-type fitting which, in collaboration with the female element (6) of the tie (4), axially fastens the two components (1, 21), and a journal (23) of diameter matching the diameter of the bore (3), in that the said clamping means are constituted by a transverse passage (5) through which there passes a spindle (9) equipped with two journals (10, 11) housed in two transverses holes (7, 8) in the first component (1) and including, between the two journals (10, 11) and in the portion to be found inside the passage (5) of the tie (4), a cam (12), the transverse section of which has at least two opposed wall parts (P, X), the distance between which is less than the distance between two axially opposed walls of the transverse housing (5) of the tie (4), said spindle (9) being equipped with means (15) to be turned in order to obtain clamping and release of the two components (1, 21) through the action of the cam (12) on the walls of the transverse passage (5) of the tie (4).

2. The assembly as claimed in claim 1, wherein the male part comprises, close to its lateral surface, tenons (27) intended to collaborate with matching notches (18) situated on the lateral surface of the female part in order to transmit torsional loads between the two assembled components (1, 21).

3. The assembly as claimed in claim 1, wherein the male part is equipped with a male preguiding element (25) collaborating with a hole (26) in the tie (4) in order to center the two components (1, 21) before the journal (23) of the second component (21) engages in the bore (3) of the first.

4. The assembly as claimed in claim 1, wherein the cam (12) of said spindle (9) has a profile which is asymmetric relative to an axial plane so as to allow clamping in just one direction of rotation of said spindle (9), wherein said profile of the cam (12) has a surface for bearing on the wall of the passage (5) of the tie (4) having a section (S1) with a rapidly progressive slope making it possible for the two components (1, 21) to approach each other rapidly after the male part (24) of the bayonet-type fitting has engaged in the corresponding female part (6), followed by a section (X) with a slow constant variation in slope in order to provide a high clamping force between the components (1, 21) followed by a short arc of a circle (S2) concentric with the axis of pivoting (A) and a section (S3) with a rapidly varying degressive slope ending in a flat (P) making it possible to keep the assembly open at rest.

5. The assembly as claimed in claim 1, wherein the tie (4) is subjected to an axial return force pushing it against the cam (12) toward the second component (21).

6. The assembly as claimed in claim 5, wherein the return force is generated by a spring (16) located in a housing at the bottom of the bore (3) in the first component (1).
